(19) Europäisches Patentamt
European Patent Office
Office européen des brevets

(11) **EP 1 257 796 B1**

(12) **FASCICULE DE BREVET EUROPEEN**

(45) Date de publication et mention
de la délivrance du brevet:
**02.06.2010 Bulletin 2010/22**

(21) Numéro de dépôt: **01907671.0**

(22) Date de dépôt: **23.01.2001**

(51) Int Cl.:
***G01L 1/10*** *(2006.01)*

(86) Numéro de dépôt international:
**PCT/FR2001/000210**

(87) Numéro de publication internationale:
**WO 2001/063234 (30.08.2001 Gazette 2001/35)**

(54) **TRANSDUCTEUR DE FORCE A VIBRATION DE FLEXION**

BIEGESCHWINGUNGSKRAFTWANDLER

FORCE TRANSDUCER WITH BENDING VIBRATION

(84) Etats contractants désignés:
**DE GB IT**

(30) Priorité: **22.02.2000 FR 0002214**

(43) Date de publication de la demande:
**20.11.2002 Bulletin 2002/47**

(73) Titulaire: **ONERA (Office National d'Etudes et de Recherches Aérospatiales)**
**92320 Châtillon (FR)**

(72) Inventeurs:
• **LE TRAON, Olivier**
**F-91430 Vauhallan (FR)**

• **JANIAUD, Denis**
**F-91940 Les Ulis (FR)**
• **LECORRE, Bernard**
**F-92360 Meudon la Forêt (FR)**
• **MULLER, Serge**
**F-91340 Ollainville (FR)**

(74) Mandataire: **Bloch & Bonnétat**
**23bis, rue de Turin**
**75008 Paris (FR)**

(56) Documents cités:
**FR-A- 1 454 891**

EP 1 257 796 B1

**EP 1 257 796 B1**

**Description**

La présente invention concerne, de manière générale, un transducteur de force destiné à constituer l'élément sensible d'un capteur de force, de pression ou d'accélération.

Plus particulièrement, l'invention a trait à un transducteur à vibration de flexion dont la fréquence varie en fonction de l'intensité de la force qui lui est appliquée. La mesure de la fréquence de vibration permet de déterminer l'intensité de la force.

Généralement, le transducteur comprend une poutre de forme allongée selon un axe longitudinal et des moyens de mise en vibration de flexion de cette poutre, l'une des extrémités du transducteur est solidaire d'une partie fixe, et la force à mesurer est appliquée à l'autre extrémité du transducteur parallèlement à l'axe de la poutre. Ainsi, en fonction du sens de la force, la poutre est soumise à une contrainte axiale d'extension ou de compression. La fréquence de résonance en flexion de la poutre est très sensible à cette contrainte axiale, ladite fréquence subissant une augmentation dans le cas d'une contrainte d'extension, et une diminution dans le cas d'une contrainte de compression. Ces phénomènes s'expliquent en considérant que ces contraintes axiales modifient la raideur propre en flexion de la poutre ; par ailleurs, le très faible allongement ou raccourcissement de la poutre qui résulte de ces contraintes axiales n'a qu'une influence pratiquement négligeable sur la variation de fréquence. Ces phénomènes présentent des analogies avec l'accordement d'un instrument de musique, qui consiste à modifier la tension de chaque corde jusqu'à obtenir la fréquence de résonance souhaitée; la principale différence entre une corde et une poutre est que la corde, du fait de sa raideur propre pratiquement nulle, ne possède pas intrinsèquement de mode propre de vibration et ne peut subir de contrainte axiale de compression. La mise en oeuvre d'un transducteur de force à corde vibrante nécessite donc que celle-ci soit soumise à une précontrainte d'extension, ce qui est la source d'instabilités de la fréquence de vibration de la corde dans le temps ou lors de variations de température. C'est pourquoi les transducteurs de force à poutre vibrante sont généralement préférés. Le lecteur aura compris également qu'un transducteur de force à poutre vibrante est d'autant plus sensible que la raideur propre en flexion de la poutre est faible, donc en particulier que les dimensions de section transverse, c'est à dire une section prise dans un plan perpendiculaire à l'axe longitudinal de la poutre, sont petites. Cependant, cette incitation à réduire les dimensions de section transverse de la poutre doit être tempérée par une autre considération qui concerne la qualité de la vibration en flexion de la poutre, qui peut être d'autant meilleure que la dimension de section transverse prise parallèlement au plan de vibration est grande. Il faut veiller également à ce que la qualité de vibration ne soit pas altérée par des fuites de l'énergie mécanique de la vibration à l'extérieur du dispositif; c'est pourquoi le transducteur comporte généralement un moyen de filtrage mécanique de la vibration. La qualité de la vibration, traduite par un coefficient dit de "qualité" ou de "surtension" , a une influence importante sur le bruit de mesure de la fréquence de la vibration, et donc de l'intensité de la force à mesurer. C'est pourquoi le dimensionnement de la poutre d'un transducteur de force résulte généralement de la recherche d'un bon compromis entre la sensibilité aux forces et la qualité de la vibration, afin d'obtenir un bon rapport "signal sur bruit" dans l'étendue de mesure souhaitée.

Généralement, la poutre est maintenue en vibration de flexion au moyen d'électrodes et d'un circuit électronique oscillateur. Par exemple, dans le cas d'une poutre en quartz, l'excitation de la vibration est avantageusement obtenue par effet piézo-électrique à partir d'électrodes adhérentes au cristal. Le quartz est également apprécié pour ses qualités mécaniques et son faible coût d'approvisionnement.

De façon générale, les transducteurs de force à poudre vibrante sont appréciés pour l'excellente stabilité de leur sensibilité aux forces, et aussi pour le fait que, leur grandeur de sortie étant une fréquence, le traitement de l'information délivrée par le transducteur ne nécessite pas de convertisseur analogique-numérique.

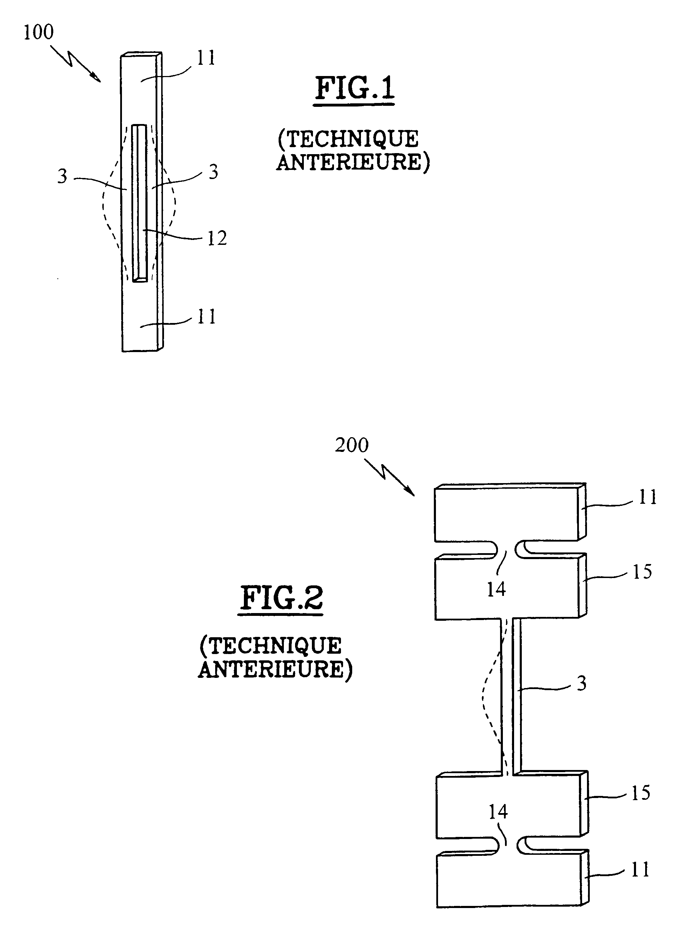

Un tel transducteur de force à deux poutres vibrantes, objet du brevet US 4,215,570 est montré à la figure 1. Le corps de ce transducteur 100 est obtenu par usinage d'une plaque plane de matériau. Ce corps comprend deux pavés d'extrémité 11 et deux poutres parallélépipédiques 3 séparées par une fente 12. Les deux poutres 3 vibrent en flexion parallèlement au plan de la plaque et en opposition de phase entre elles, ainsi qu'il est montré, de façon exagérément agrandie, par les lignes en pointillé à la figure 1. Si les deux poutres sont suffisamment identiques, les efforts vibratoires qu'elles exercent à leurs extrémités s'équilibrent entre eux et ainsi les deux pavés d'extrémité 11 ne vibrent pratiquement pas, ce qui permet de fixer lesdits pavés d'extrémité sur le corps (non représenté) d'un capteur de force, de pression ou d'accélération sans dégrader la qualité de vibration des poutres 3. Le transducteur 100 réalise ainsi une fonction de filtrage mécanique des vibrations des poutres 3. Ce transducteur est bien adapté à la mesure de forces d'intensités ordinaires. Par contre, ce transducteur présente un inconvénient concernant l'efficacité du filtrage mécanique des vibrations lorsque la sensibilité du transducteur doit être suffisamment grande pour mesurer convenablement des forces de faibles intensités ; dans ce cas, qui impose de réduire notablement les dimensions de section transverse des deux poutres 3, il devient difficile de respecter suffisamment la condition d'identité dimensionnelle desdites poutres, ce qui se traduit dans la pratique par une dégradation de l'efficacité du filtrage mécanique et donc par une dégradation de la qualité des vibrations.

Afin d'améliorer cet aspect concernant la mesure de forces de faibles intensités, on a proposé des transducteurs de force à poutre vibrante unique, dont deux exemples sont présentés dans ce qui suit.

Un premier transducteur de force à poudre vibrante unique, objet du brevet FR 2 574 209 au nom du demandeur, est montré à la figure 2. Le corps de ce transducteur 200 est obtenu par usinage d'une plaque plane de matériau. Ce corps comprend deux pavés d'extrémité 11, deux éléments souples en rotation 14, deux masses d'inertie rigides 15 et une poutre parallélépipédique 3. La poutre 3 vibre en flexion parallèlement au plan de la plaque, ainsi qu'il est montré, de façon exagérément agrandie, par la ligne en pointillé à la figure 2. Le rôle des masses d'inertie 15 et des éléments souples en rotation 14 est de procurer un filtrage mécanique des vibrations de la poutre 3 afin que les deux pavés d'extrémité 11 ne vibrent pratiquement pas, ce qui permet de fixer lesdits pavés sur le corps (non représenté) d'un capteur sans dégrader la qualité des vibrations de la poutre 3. A l'échelle du dessin en pointillé de la déformée en vibration de la poutre 3, les déplacements alternatifs en rotation des masses d'inertie 15 ne sont pas visibles, car beaucoup plus petits que l'amplitude de vibration de la poutre 3 dont la déformée correspond pratiquement à celle d'une poutre encastrée à ses extrémités ; cela est dû au fait que les masses d'inertie 15 sont nettement plus grandes que la masse de la poutre vibrante 3. On notera que la poutre vibrante 3 et les pavés d'extrémité 11 de ce transducteur de force 200 sont les homologues respectivement des poutres vibrantes 3 et des pavés d'extrémité 11 du transducteur de force 100 montré à la figure 1.

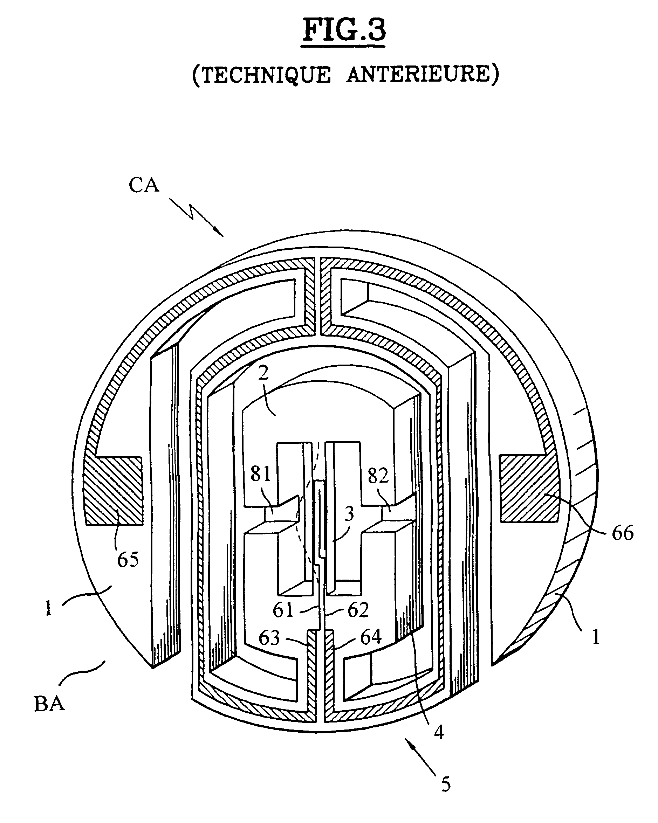

Un second transducteur de force à poutre vibrante unique a été proposé pour le capteur monolithique d'accélération objet du brevet FR 2 739 190 au nom du demandeur et montré à la figure 3. Le corps de ce capteur d'accélération CA est obtenu par usinage d'une plaque plane de quartz. Ce corps comprend une partie fixe 1 constituée de deux segments discoïdes, un cadre flexible 5, une masse d'épreuve 2, deux lamelles 81 et 82 d'articulation de la masse d'épreuve, une seconde partie massive 4 et un transducteur de force 3 sous la forme d'une simple poutre parallélépipédique. Cette poutre 3 vibre en flexion parallèlement au plan de la plaque, ainsi qu'il est montré, de façon exagérément agrandie, par la ligne en pointillé à la figure 3. Lorsque le capteur CA est soumis à une accélération sensiblement perpendiculaire au plan de la plaque, la masse d'épreuve 2 exerce sur la poutre vibrante 3 une force axiale d'extension ou de compression, ce qui modifie la fréquence de la vibration ; l'observation continue de ladite fréquence permet ainsi de connaître à chaque instant l'accélération appliquée. La masse d'épreuve 2 joue également un autre rôle dans le fonctionnement du capteur d'accélération CA, puisque les parties massives 2 et 4 et le cadre flexible 5 permettent de réaliser un filtrage mécanique des vibrations de la poutre 3, afin que la partie fixe 1 du capteur CA ne vibre pratiquement pas, ce qui permet de fixer ladite partie fixe sur une embase de boîtier BA (non représentée) sans dégrader la qualité des vibrations de la poutre 3. A l'échelle du dessin en pointillé de la déformée en vibration de la poutre 3, les déplacements alternatifs en translation des parties massives 2 et 4 ne sont pas visibles, car beaucoup plus petits que l'amplitude de vibration de la poutre 3 dont la déformée correspond pratiquement à celle d'une poutre encastrée à ses extrémités ; cela est dû au fait que les masses des parties 2 et 4 sont nettement plus grandes que la masse de la poutre vibrante 3. Ainsi, le filtrage mécanique des vibrations du transducteur de force 3 est réalisé à l'extérieur dudit transducteur de force, et non à l'intérieur comme c'est le cas des transducteurs de force 100 et 200 montrés aux figures 1 et 2 respectivement. La figure 3 montre également des moyens de mise en vibration en flexion de la poutre 3 par effet piézoélectrique, sous la forme de deux électrodes métalliques 61 et 62 ayant des polarités opposées et agissant principalement sur la moitié centrale de longueur de la poutre 3 grâce à une disposition dite à "trois pistes" qui permet d'exciter les contraintes mécaniques des fibres de la poutre 3 alternativement tendues et comprimées, ainsi qu'expliqué dans le brevet FR 2 685 964 au nom du demandeur. Des connexions électriques entre les électrodes 61 et 62 et des traversées étanches (non représentées) de l'embase du boîtier sont réalisées au niveau des deux segments discoïdes 1 par soudure sur des plages de contact métalliques 65 et 66 reliées aux électrodes 61 et 62 par deux rubans conducteurs métalliques 63 et 64.

L'efficacité du filtrage mécanique des vibrations des dispositifs à poutre vibrante unique montrés aux figures 2 et 3 dépend du rapport de masse entre des parties massives et la poutre, et par conséquent il n'y a pas de difficulté particulière pour conserver une bonne efficacité du filtrage lorsque les dimensions de section transverse de la poutre unique doivent être réduites. C'est pourquoi ces dispositifs à poutre vibrante unique sont mieux adaptés à la mesure de forces de faibles intensités que le dispositif à deux poutres vibrantes montré à la figure 1.

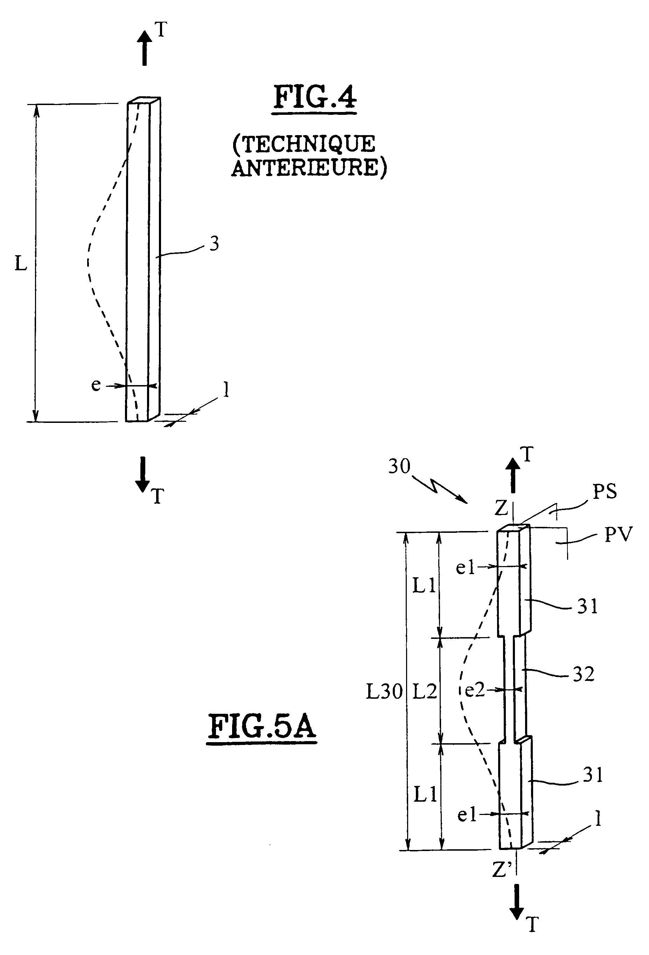

Cependant, comme expliqué antérieurement, la réduction des dimensions de section transverse de la poutre présente une limitation due à la diminution du coefficient de qualité qui en résulte. Cette limitation peut être modélisée de façon théorique dans le cas habituel d'une poutre parallélépipédique à section transverse rectangulaire de l'état de l'art. A cette fin, on appellera "épaisseur e" la dimension de section transverse prise parallèlement au plan de vibration et "largeur 1" l'autre dimension de section transverse, comme montré à la figure 4 qui représente une poutre 3 de longueur L vibrant en flexion et pouvant constituer l'une quelconque des poutres 3 des dispositifs de l'art antérieur illustrés aux figures 1, 2 et 3. De plus on appellera F la fréquence de vibration en flexion de la poutre 3 en l'absence de force axiale d'extension ou de compression, Q le coefficient de qualité de cette vibration, et $\Delta$F la variation de fréquence engendrée par une force axiale T.

Il est connu que la variation de fréquence $\Delta$F peut s'écrire sous la forme :

$$\Delta F = \lambda \times T / (l \times e^2)$$

où $\lambda$ est un coefficient dépendant de caractéristiques mécaniques du matériau.

Cette expression de la variation de fréquence $\Delta F$ est indépendante de la longueur L de la poutre 3.

En ce qui concerne le coefficient de qualité Q de la vibration, il est également connu de l'homme du métier que sa valeur est tributaire des échanges de chaleur entre les fibres de la poutre alternativement tendues et comprimées, et qu'une modélisation théorique de ce phénomène thermodynamique permet d'exprimer le coefficient de qualité Q sous la forme :

$$Q \# \mu \times F \times e^2$$

où $\mu$ est un coefficient dépendant de caractéristiques mécaniques et thermiques du matériau.

Cette expression du coefficient de qualité Q ne fait pas intervenir explicitement la longueur L de la poutre 3, mais L intervient, ainsi qu'il est connu, via la fréquence F.

Ces expressions de la sensibilité $\Delta F$ à une force axiale et du coefficient de qualité Q de la vibration montrent bien l'influence importante de l'épaisseur e, et plus précisément montrent qu'une augmentation de la sensibilité obtenue par une réduction de l'épaisseur e s'accompagne d'une diminution du coefficient de qualité dans les mêmes proportions, toutes choses étant égales par ailleurs. L'optimisation des dimensions de la poutre résulte donc de la recherche du compromis le mieux adapté à l'application visée. Afin de traduire plus clairement cette relation antagoniste entre la sensibilité à une force axiale et la qualité de la vibration, il est intéressant d'introduire une fonction $\psi$ caractéristique de la poutre parallélépipédique à section transverse rectangulaire, et définie comme étant le produit de $\Delta F$ et de Q :

$$\psi = \Delta F \times Q \# \lambda \times \mu \times F \times T / l$$

Ainsi, la fonction $\psi$ ne dépend pas explicitement de l'épaisseur e, mais seulement de la fréquence F, de la largeur 1, de caractéristiques thermoélastiques du matériau et de la force axiale T.

Il est avantageux de se placer dans les conditions qui rendent maximale la valeur de la fonction $\psi$, car cela permet d'améliorer le compromis entre la sensibilité $\Delta F$ à la force T et le coefficient de qualité Q de la vibration. A cette fin, il convient donc de choisir la fréquence F la plus élevée possible compte tenu d'autres considérations telles que, par exemple, l'influence de la température, et la largeur 1 la plus petite possible compte tenu d'autres considérations telles que, par exemple, la résistance au flambage de la poutre qui doit pouvoir supporter des forces axiales de compression dans l'étendue de mesure souhaitée. Par ailleurs, en ce qui concerne le matériau, il n'est généralement pas réaliste de viser à augmenter les coefficients $\lambda$ et $\mu$ car le choix du matériau est fréquemment dicté par d'autres considérations, plus impératives, telles que, par exemple, les contraintes de fabrication industrielle ; on précise toutefois qu'avec le quartz et le silicium, matériaux largement utilisés dans l'industrie, les coefficients $\lambda$ et $\mu$ atteignent des valeurs satisfaisantes.

Ainsi, la fonction $\psi$ traduit bien une limitation des performances des transducteurs de force à poutre vibrante parallélépipédique à section transverse rectangulaire.

La présente invention vise à améliorer les performances des transducteurs de force à poutre vibrante connus décrits précédemment, en proposant une forme géométrique de poutre vibrante qui permet de repousser la limitation des performances inhérente à la forme parallélépipédique habituelle.

Selon l'invention, la poutre vibrante est caractérisée en ce que son épaisseur est réduite sur une portion centrale de sa longueur et sa largeur est constante.

Ainsi, il est possible d'améliorer le compromis entre la sensibilité $\Delta F$ à une force axiale et le coefficient de qualité Q de la vibration, en obtenant pour le produit $\Delta F \times Q$ une valeur supérieure à celle correspondant à une poutre de forme parallélépipédique.

Ainsi, il est possible d'augmenter la sensibilité $\Delta F$ du transducteur en conservant le même coefficient de qualité Q, ce qui permet de réaliser un transducteur plus précis et donc mieux adapté à la mesure de forces de faibles intensités.

D'une façon analogue, il est également possible d'augmenter le coefficient de qualité Q en conservant la même sensibilité $\Delta F$, ce qui est favorable à la réduction du bruit de la mesure et permet de réaliser un transducteur à résolution améliorée.

Plus généralement, entre ces deux cas extrêmes, la poutre selon l'invention permet de réaliser un transducteur plus performant que la poutre parallélépipédique.

Il doit être entendu que l'invention ne concerne pas seulement la mesure de forces de faibles intensités et que l'utilisation de la poutre selon l'invention en remplacement de la poutre parallélépipédique de dispositifs tels que, par exemple, ceux illustrés aux figures 1, 2 et 3 permet d'améliorer les performances desdits dispositifs.

Selon une réalisation préférée, la poutre comprend deux tronçons d'extrémité sensiblement identiques et un tronçon central dont l'épaisseur vaut sensiblement la moitié de l'épaisseur des tronçons d'extrémité, et dont la longueur est sensiblement égale à celle de chacun des tronçons d'extrémité.

Selon une autre réalisation préférée, l'épaisseur de la poutre décroît de façon continue depuis les extrémités de la poutre jusqu'au milieu de sa longueur.

D'autres caractéristiques et avantages de l'invention apparaîtront plus clairement à la lecture de la description détaillée et des figures qui s'y rapportent dans lesquelles:

- la figure 1 est une vue en perspective d'un transducteur de forces à deux poutres vibrantes appartenant à l'art antérieur et déjà commenté;
- la figure 2 est une vue en perspective d'un transducteur de force à poutre vibrante unique appartenant à l'art antérieur et déjà commenté;
- la figure 3 est une vue en perspective d'un capteur d'accélération appartenant à l'art antérieur et déjà commenté, montrant que l'élément sensible dudit capteur d'accélération est un transducteur de force sous la forme d'une simple poutre vibrante parallélépipédique;
- la figure 4 est une vue en perspective d'une poutre vibrante parallélépipédique appartenant à l'art antérieur et déjà commentée, pouvant constituer l'une quelconque des poutres vibrantes des dispositifs de l'art antérieur illustrés aux figures 1, 2 et 3;
- la figure 5A est une vue en perspective d'une poutre vibrante selon une première réalisation de l'invention;
- la figure 5B est une vue de face de la poutre vibrante de la figure 5A montrant des déformations exagérément agrandies des deux tronçons d'extrémité et du tronçon central, pour expliquer que chacun desdits tronçons contribue de façon équilibrée à la vibration en flexion de la poutre.
- la figure 6 est une vue en perspective d'une poutre vibrante selon une autre réalisation de l'invention;
- la figure 7 est une vue en perspective d'un transducteur de force inspiré du transducteur connu à deux poutres vibrantes illustré à la figure 1, pour lequel les deux poutres parallélépipédiques 3 ont été remplacées par deux poutres 30 conformes à l'invention;
- la figure 8 est une vue en perspective d'un transducteur de force inspiré du transducteur connu à poutre vibrante unique illustré à la figure 2, pour lequel la poutre parallélépipédique 3 a été remplacée par une poutre 30 conforme à l'invention;
- la figure 9 est une vue en perspective d'un capteur d'accélération inspiré du capteur connu illustrée la figure 3, pour lequel la poutre parallélépipédique 3 a été remplacée par une poutre 30 conforme à l'invention.

En référence à la figure 5A, une poutre vibrante 30 selon l'invention comprend deux tronçons d'extrémité 31 et un tronçon central 32. Selon la réalisation illustrée à la figure 5A, la poutre 30 s'étend suivant un axe longitudinal central Z'Z contenu dans les plans PV, plan médian de vibration, et PS, perpendiculaire à PV, qui sont des plans de symétrie de la poutre.

Chaque tronçon d'extrémité 31 a une forme parallélépipédique de longueur L1 prise suivant l'axe Z'Z, d'épaisseur e1 prise parallèlement au plan PV et de largeur l prise parallèlement au plan PS.

Le tronçon central 32 a une forme parallélépipédique de longueur L2 prise suivant l'axe Z'Z, d'épaisseur e2 prise parallèlement au plan PV et de largeur l prise parallèlement au plan PS. Ainsi, la longueur totale L30 de la poutre vaut L1 + L2 + L1 et sa largeur 1 est constante. Pour faciliter, dans ce qui va suivre, la comparaison entre la poutre selon l'invention illustrée à la figure 5A et la poutre parallélépipédique de l'art antérieur illustrée à la figure 4, on a conservé la même largeur 1. Selon la réalisation illustrée à la figure 5A, l'épaisseur e2 du tronçon central 32 vaut sensiblement la moitié de l'épaisseur e1 des tronçons d'extrémité 31; e2 est généralement comprise entre le tiers et les deux-tiers de l'épaisseur la plus forte e1 prise aux extrémités de la poutre. Toujours selon la réalisation illustrée, la longueur L2 du tronçon central 32 est sensiblement égale à la longueur L1 de chacun des tronçons d'extrémité 31 ; L2 est généralement comprise entre la moitié et le double de la longueur L1.

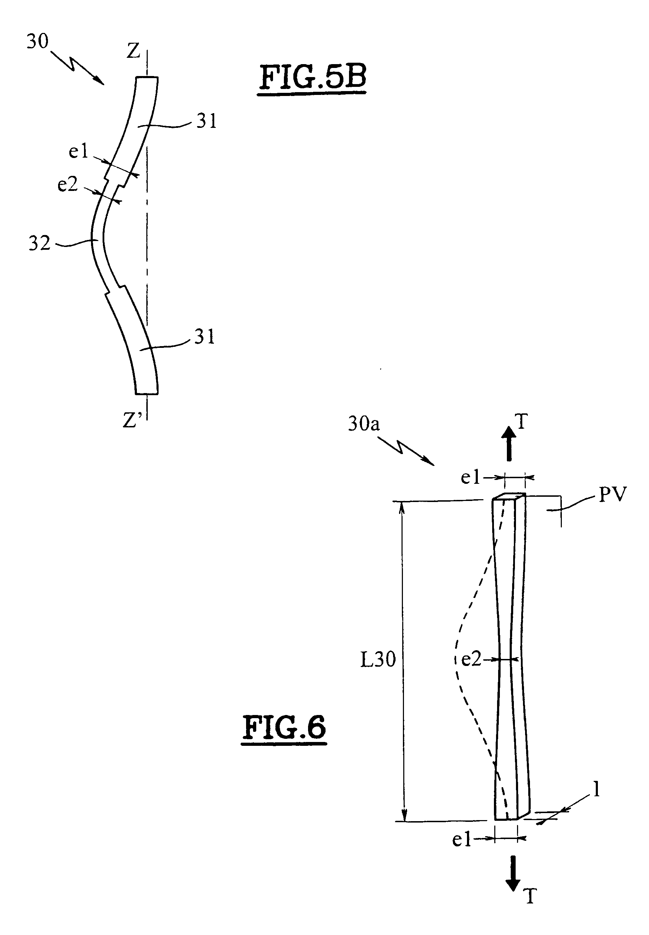

Le fonctionnement de la poutre vibrante selon l'invention est maintenant présenté en référence à la figure 5B qui montre la déformation exagérément agrandie de la poutre 30 de la figure 5A vibrant en flexion parallèlement au plan PV. L'allure générale de ladite déformation, par ailleurs représentée en pointillé à la figure 5A, est sensiblement la même que celle correspondant au cas de la poutre parallélépipédique 3 illustrée à la figure 4. En d'autres termes, les deux discontinuités d'épaisseur aux passages de e1 à e2 ne modifient pas de façon notable l'allure de la déformée en vibration de la poutre. Ceci résulte du fait que, les contraintes mécaniques étant plus intenses au voisinage des extrémités encastrées de la poutre, la déformation des tronçons d'extrémité 31 est du même ordre de grandeur que celle du tronçon central 32, à condition que la souplesse des tronçons d'extrémité 31 soit en harmonie avec celle du tronçon central 32, ce qui est réalisé dans la pratique lorsque l'épaisseur e2 est au moins égale au tiers de l'épaisseur e1 et la longueur L2 est comprise entre la moitié et le double de la longueur L1. Ainsi, la vibration de la poutre 30 selon l'invention résulte d'un partage sensiblement équilibré du travail des tronçons d'extrémité 31 et du travail du tronçon central 32. On notera qu'il n'est pas nécessaire, pour le fonctionnement de la poutre selon l'invention, que les deux tronçons d'extrémité 31 soient strictement identiques, comme c'est le cas pour la réalisation illustrée à la figure 5A; dans le cas où lesdits tronçons d'extrémité ont des longueurs ou des épaisseurs sensiblement différentes, tout en respectant les conditions dimensionnelles ci-dessus mentionnées par rapport au tronçon central 32, les performances du transducteur sont moins bonnes que dans le cas de la stricte identité des deux tronçons d'extrémité, mais restent toutefois meilleures que celles des transducteurs connus.

De façon analogue au cas précédemment expliqué de la poutre parallélépipédique, il est intéressant d'introduire une fonction ψ' caractéristique des performances de la poutre selon l'invention. A cette fin, on appelle F' la fréquence de vibration en flexion de la poutre selon l'invention en l'absence de force axiale d'extension ou de compression, Q' le coefficient de qualité de cette vibration, ΔF' la variation de fréquence engendrée par une force axiale T, et on définit la fonction ψ' comme étant le produit de ΔF' et de Q' :

$$\psi' \; = \; \Delta F' \, x \; Q'$$

Dans le cas de la poutre 30 illustrée à la figure 5A, où e2 vaut sensiblement la moitié de e1 et L2 est sensiblement égale à L1, la fonction ψ' peut s'écrire sous la forme:

$$\psi' \; \# \; 1,4 \; x \; \lambda \; x \; \mu \; x \; F' \; x \; T/l$$

où λ et μ sont les coefficients précédemment utilisés caractérisant le comportement thermoélastique du matériau.

Ainsi, pour une même fréquence F' = F de vibration, la poutre selon l'invention permet d'obtenir une valeur de ψ' environ 1,4 fois plus grande que la valeur de ψ définie pour la poutre parallélépipédique.

Ainsi, le compromis entre la sensibilité ΔF' à une force axiale et le coefficient de qualité Q' de la vibration est amélioré.

Ainsi, il est possible d'augmenter de 40% la sensibilité ΔF' du transducteur de force en conservant le même coefficient de qualité Q' = Q, ce qui permet de réaliser un transducteur plus précis et donc mieux adapté à la mesure de forces de faibles intensités.

D'une façon analogue, il est également possible d'augmenter de 40% le coefficient de qualité Q' en conservant la même sensibilité ΔF'= ΔF, ce qui est favorable à la réduction du bruit de la mesure et permet de réaliser un transducteur à résolution améliorée.

Plus généralement, entre ces deux cas extrêmes, la poutre selon l'invention permet de réaliser un transducteur plus performant que la poutre parallélépipédique.

La figure 6 montre une autre réalisation de poutre vibrante selon l'invention. La poutre vibrante 30a diffère de la poutre vibrante 30 de la figure 5A principalement par l'évolution progressive de son épaisseur le long de sa longueur L30 ; ladite épaisseur décroît ainsi, de façon continue, de l'épaisseur e1 des extrémités de la poutre jusqu'à l'épaisseur e2 au milieu de la longueur L30, dans la portion centrale de la poutre. De même que pour la poutre vibrante 30, la poutre vibrante 30a vibre en flexion parallèlement au plan PV et l'épaisseur e2 est généralement comprise entre le tiers et les deux-tiers de l'épaisseur e1. La poutre vibrante 30a permet de bénéficier des mêmes avantages que ceux de la poutre vibrante 30, concernant la précision et la résolution de la mesure.

La poutre vibrante selon l'invention peut avoir d'autres formes que celle de la poutre à trois tronçons selon la réalisation illustrée à la figure 5A ou celle dont l'épaisseur évolue progressivement selon la réalisation illustrée à la figure 6. Plus précisément, la poutre selon l'invention peut avoir une forme intermédiaire en comprenant (2n+1) tronçons parallélépipédiques, disposés selon sa longueur (L30), n étant un nombre entier supérieur à 1, l'important étant que les épaisseurs desdits tronçons décroissent des extrémités de la poutre vers sa portion centrale, pouvant comprendre plusieurs tronçons, et que l'épaisseur du tronçon central soit compris entre le tiers et les deux-tiers de l'épaisseur des tronçons d'extrémités.

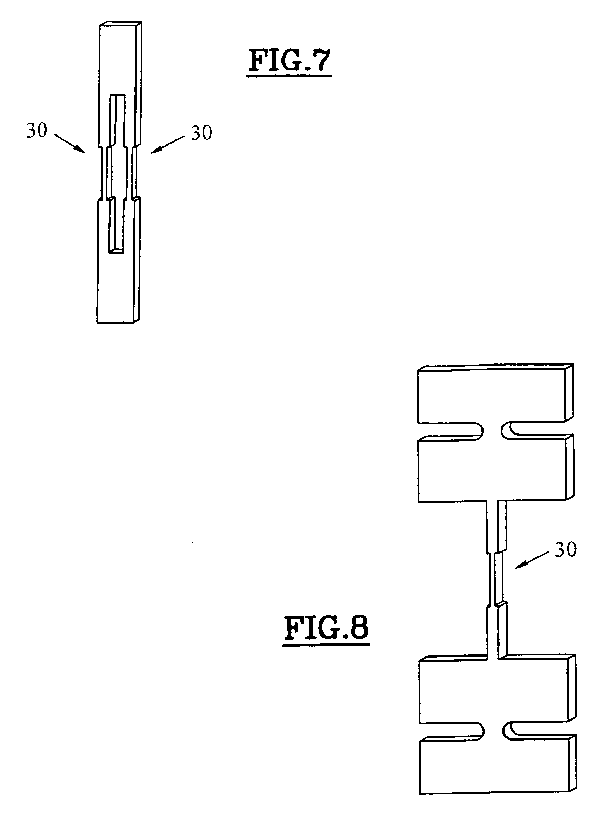

Les figures 7 et 8 montrent des transducteurs de force inspirés des transducteurs connus illustrés aux figures 1 et 2 respectivement, mais pour lesquels les poutres vibrantes parallélépipédiques 3 ont été remplacées par des poutres vibrantes 30 conformes à l'invention, ce qui permet d'améliorer les performances desdits transducteurs connus.

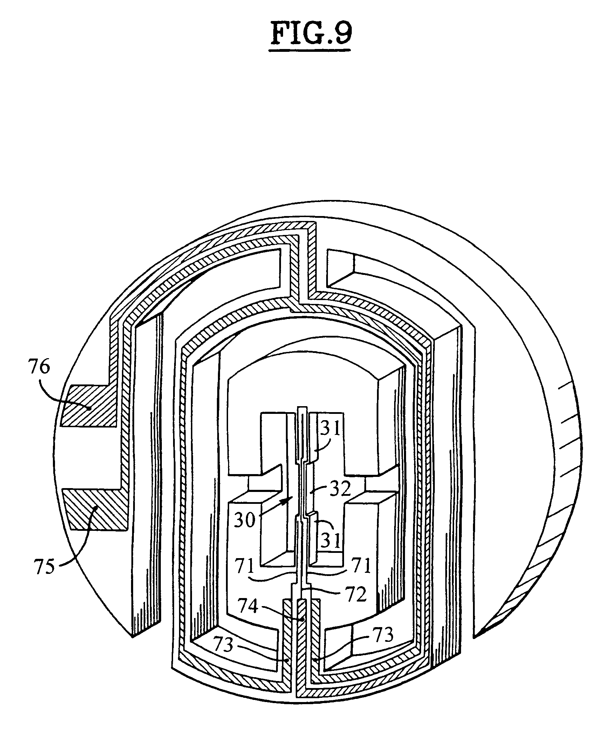

La figure 9 montre un capteur monolithique d'accélération inspiré du capteur connu illustré à la figure 3, mais pour lequel la poutre vibrante parallélépipédique 3 a été remplacée par une poutre 30 conforme à l'invention, ce qui permet d'améliorer les performances dudit capteur connu.

La figure 9 montre également des moyens de mise en vibration en flexion de la poutre 30 par effet piézo-électrique, sous la forme de deux électrodes métalliques 71 et 72 ayant des polarités opposées et agissant principalement sur les deux tronçons d'extrémité 31 grâce à une disposition à "trois pistes", les deux pistes disposées sur le tronçon central 32 ne jouant qu'un rôle de connexion électrique entre les électrodes des tronçons d'extrémité. Les rubans conducteurs métalliques 73 et 74 permettent de relier les électrodes 71 et 72 aux plages de contact 75 et 76. Dans le cas des poutres à évolution progressives ou à (2n+1) tronçons, les électrodes sont disposées sur la poutre au voisinage de ses extrémités, les deux pistes disposées sur la portion centrale ne jouant qu'un rôle de connexion électrique.

**Revendications**

1. Transducteur de force comprenant une poutre (30) de longueur (L30) et de section rectangulaire d'épaisseur (e) et de largeur (l) vibrant en flexion, **caractérisé en ce que** l'épaisseur (e) de ladite poutre est réduite sur une portion centrale (32) de sa longueur et que sa largeur (1) est constante.

2. Transducteur de force selon la revendication 1, **caractérisé en ce que** l'épaisseur (e2) prise au milieu de la longueur (L30) de la poutre est comprise entre le tiers et les deux-tiers de l'épaisseur la plus forte (e1) prise aux extrémités de la poutre.

3. Transducteur de force selon la revendication 2, **caractérisé en ce que** la poutre (30) comprend, disposés selon sa longueur (L30), un nombre entier impair de tronçons parallélépipédiques (31, 32) dont les épaisseurs (e1, e2') décroissent des extrémités de la poutre vers sa portion centrale.

4. Transducteur de force selon la revendication 3, **caractérisé en ce que** lesdits tronçons (31, 32) sont au nombre de trois, dont deux tronçons d'extrémité (31) sensiblement identiques et un tronçon central (32), la longueur (L2) du tronçon central (32) étant comprise entre la moitié et le double de la longueur (L1) de chacun des tronçons d'extrémité (31).

5. Transducteur de force selon la revendication 4, **caractérisé en ce que** l'épaisseur (e2) du tronçon central (32) vaut sensiblement la moitié de l'épaisseur (e1) des tronçons d'extrémité (31), et que la longueur (L2) du tronçon central (32) est sensiblement égale à la longueur (L1) de chacun des tronçons d'extrémité (31).

6. Transducteur de force selon les revendications 1 ou 2, **caractérisé en ce que** l'épaisseur de la poutre décroît de façon continue depuis les extrémités de la poutre jusqu'au milieu de sa longueur.

7. Transducteur de force selon l'une quelconque des revendications précédentes, **caractérisé en ce que** les moyens de mise en vibration de la poutre sont des électrodes disposées sur la poutre au voisinage de ses extrémités.

8. Transducteur de force selon la revendication 7, **caractérisé en ce que** les électrodes d'extrémités sont reliées par des pistes ne jouant qu'un rôle de connexion électrique.

**Claims**

1. A force transducer comprising a beam (30) of length (L30) and having a rectangular cross-section of thickness (e) and width (1) adapted for vibrating flexionally, **characterized in that** the thickness (e) of said beam is reduced over a central portion (32) of its length and its width (1) is constant.

2. A force transducer according to claim 1, **characterized in that** the thickness (e2) in the middle of the length (L30) of the beam lies between one third and two thirds the greatest thickness (e1) at the ends of the beam.

3. A force transducer according to claim 2, **characterized in that** the beam (30) comprises an odd integer number of parallelepiped-shaped portions (31, 32) disposed along its length (L30), the thickness (e1, e2) of the portions decreasing from the ends of the beam toward its central portion.

4. A force transducer according to claim 3, **characterized in that** there are three portions (31, 32) including two end portions (31) which are substantially identical and a central portion (32), the length (L2) of the central portion (32) lying between half and twice the length (L1) of each of the end portions (31).

5. A force transducer according to claim 4, **characterized in that** the thickness (e2) of the central portion (32) is substantially half the thickness (e1) of the end portions (31), and the length (L2) of the central portion (32) is substantially equal to the length (L1) of each of the end portions (31).

6. A force transducer according to claim 1 or 2, **characterized in that** the thickness of the beam decreases continuously from the ends of the beam to the middle of its length.

7. A force transducer according to any one of the preceding claims, **characterized in that** the means for imparting vibration to the beam are electrodes disposed on the beam in the vicinity of its ends.

8. A force transducer according to claim 7, **characterized in that** the end electrodes are connected by tracks having only an electrical connection role.


**Patentansprüche**

1. Kraftwandler umfassend einen Balken (30) mit der Länge (L30) und mit einem rechteckigem Querschnitt der Dicke (e) und der Breite (1), welcher beim Biegen vibriert, **dadurch gekennzeichnet, dass** die Dicke (e) des Balkens in einem mittigen Abschnitt (32) seiner Länge verringert ist und dass seine Breite (1) konstant ist.

2. Kraftwandler nach Anspruch 1, **dadurch gekennzeichnet, dass** die Dicke (e2), die in der Mitte der Länge (L30) des Balkens gemessen wird, ein Drittel bis zwei Drittel der größten Dicke (e1), die an den Enden des Balkens gemessen wird, beträgt.

3. Kraftwandler nach Anspruch 2, **dadurch gekennzeichnet, dass** der Balken (30) entlang seiner Länge (L30) eine ganze ungerade Zahl an spatförmigen Teilstücken (31, 32) umfasst, deren Dicken (e11, e2) von den Enden des Balkens in Richtung seines mittigen Abschnitts abnehmen.

4. Kraftwandler nach Anspruch 3, **dadurch gekennzeichnet, dass** die Anzahl der Teilstücke (31, 32) drei beträgt, nämlich zwei endständige Teilstücke (31), die im Wesentlichen gleichartig sind, und ein mittiges Teilstück (32), wobei die Länge (L2) des mittigen Teilstücks (32) die Hälfte bis das Doppelte der Länge (L1) jedes der endständigen Teilstücke (31) beträgt.

5. Kraftwandler nach Anspruch 4, **dadurch gekennzeichnet, dass** die Dicke (e2) des mittigen Teilstücks (32) im Wesentlichen die Hälfte der Dicke (e1) der endständigen Teilstücke (31) ausmacht und dass die Länge (L2) des mittigen Teilstücks (32) im Wesentlichen gleich der Länge (L1) jedes der endständigen Teilstücke (31) ist.

6. Kraftwandler nach den Ansprüchen 1 oder 2, **dadurch gekennzeichnet, dass** die Dicke des Balkens von den Enden des Balkens bis zur Mitte seiner Länge kontinuierlich abnimmt.

7. Kraftwandler nach einem der vorhergehenden Ansprüche, **dadurch gekennzeichnet, dass** es sich bei den Mitteln, die den Balken in Vibration versetzen, um Elektroden handelt, die an dem Balken in der Nähe seiner Enden angeordnet sind.

8. Kraftwandler nach Anspruch 7, **dadurch gekennzeichnet, dass** die endständigen Elektroden durch Bahnen verbunden sind, die ausschließlich zum elektrischen Anschluss dienen.

100

11

3 3

12

11

## FIG.1

(TECHNIQUE
ANTERIEURE)

200

11

14 15

3

15

14

11

## FIG.2

(TECHNIQUE
ANTERIEURE)

# FIG.3

## (TECHNIQUE ANTERIEURE)

## FIG.4

(TECHNIQUE
ANTERIEURE)

L

3

e

l

T

T

30

T

Z

PS

PV

L1

e1

31

L30 L2

e2

32

FIG.5A

L1

e1

31

l

Z'

T

## FIG.5B

30

Z

31

e1

e2

32

31

Z'

## FIG.6

30a

T

e1

PV

L30

e2

l

e1

T

**FIG.7**

30          30

**FIG.8**

30

# FIG.9

**EP 1 257 796 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4215570 A
- FR 2574209

- FR 2739190
- FR 2685964